# FASCICULE DE BREVET EUROPEEN

(11) **EP 3 715 259 B1**
(45) Date de publication et mention de la délivrance du brevet: **13.10.2021**
(21) Numéro de dépôt: 20165239.3
(22) Date de dépôt: 24.03.2020
(51) Int. Cl.: B64D 27/26

(54) **ENSEMBLE POUR UN AÉRONEF, L'ENSEMBLE COMPORTANT UN MÂT, UNE ATTACHE MOTEUR ET UN SYSTÈME DE FIXATION ENTRE LE MÂT ET L'ATTACHE MOTEUR**
ANORDUNG FÜR EIN LUFTFAHRZEUG MIT EINEM MAST, EINER MOTORHALTERUNG UND EINEM FIXIERSYSTEM ZWISCHEN DEM MAST UND DER MOTORHALTERUNG
ASSEMBLY FOR AN AIRCRAFT, THE ASSEMBLY COMPRISING A MAST, AN ENGINE MOUNT AND AN ATTACHMENT SYSTEM BETWEEN THE MAST AND THE ENGINE MOUNT

(30) Priorité: 26.03.2019 FR 1903152
(43) Date de publication de la demande: 30.09.2020
(73) Titulaire: AIRBUS OPERATIONS, 31060 Toulouse Cedex 9 (FR)
(72) Inventeur: PETRISSANS, Isabelle, 31270 Cugnaux (FR); LANSIAUX, Rémi, 31000 Toulouse (FR); FORICHON, Pascal, 31100 Toulouse (FR); PEREZ, Patrice, 31620 Fronton (FR); HU, Wan, 31200 Toulouse (FR)
(74) Mandataire: Cabinet Le Guen Maillet

(56) Documents cités:
- DE-A1-102011 075 919
- US-A- 4 603 822
- US-A1- 2008 042 007

## Description

### DOMAINE TECHNIQUE

La présente invention concerne un ensemble pour un aéronef, où l'ensemble comporte un mât, une attache moteur et un système de fixation entre le mât et l'attache moteur, ainsi qu'un aéronef comportant au moins un tel ensemble.

### ETAT DE LA TECHNIQUE ANTERIEURE

Un aéronef comporte classiquement une aile sous laquelle est fixé un mât auquel est fixé un moteur. Le moteur est fixé au mât via un système d'attaches constitué, entre autres, à l'avant par une attache moteur avant et à l'arrière par une attache moteur arrière.

Le mât comporte une semelle qui s'étend en partie inférieure du mât et l'attache moteur se plaque sous la semelle.

La fixation entre le mât et l'attache moteur est réalisée par des boulons qui serrent l'attache moteur contre la face inférieure de la semelle. A cette fin, pour chaque boulon, la semelle et l'attache moteur comportent un alésage traversant.

Chaque système de fixation comporte une tige filetée, un écrou et une rondelle d'appui. La rondelle d'appui est placée contre la face supérieure de la semelle, la tête de la tige filetée vient en appui contre la rondelle d'appui et la tige filetée traverse successivement l'alésage de la semelle et l'alésage de l'attache moteur. L'écrou se visse alors sur l'extrémité de la tige filetée.

Afin d'éviter la perte des rondelles d'appui des différents systèmes de fixation, les rondelles d'appui sont fixées les unes aux autres par des bras auxquels elles sont soudées.

Bien qu'une telle installation soit satisfaisante, il peut arriver qu'au cours de l'installation, la force qui est exercée pour serrer un boulon entraîne la rotation de la rondelle d'appui correspondante. Une telle mise en rotation a pour conséquence une déformation des bras. Pour éviter une telle déformation, les bras sont relativement lourds pour être suffisamment rigides.

Le document US-A-2008/042007 divulgue un ensemble pour aéronef de l'état de la technique.

### EXPOSE DE L'INVENTION

Un objet de la présente invention est de proposer un ensemble pour un aéronef où l'ensemble comporte un mât, une attache moteur et un système de fixation entre le mât et l'attache moteur, et où le système de fixation comporte une rondelle d'appui qui soit prisonnière et libre de tourner autour de son axe permettant de réduire le poids des éléments fixant les rondelles d'appui entre elles.

A cet effet, est proposé un ensemble pour un aéronef, ledit ensemble comportant :
- un mât présentant une face d'appui et une face de contact orientée à l'opposé de la face d'appui,
- une attache moteur présentant une face d'appui et une face de contact orientée à l'opposé de la face d'appui, où la face de contact de l'attache moteur est en appui contre la face de contact du mât,
- au moins deux boulons, chacun comportant une tige filetée avec une tête et un écrou en appui contre la face d'appui de l'attache moteur,
- pour chaque tête, une rondelle d'appui avec une première face d'appui et une deuxième face d'appui, où la deuxième face d'appui de la rondelle d'appui est en appui contre la face d'appui du mât, et où la tête est en appui contre la première face d'appui de la rondelle d'appui,
- un sabot, et
- pour chaque rondelle d'appui, une pince solidaire du sabot et comportant une première branche et une deuxième branche entre lesquelles la rondelle d'appui est pincée et libre de tourner autour de son axe.

Avec un tel ensemble, la rondelle d'appui ne peut pas s'échapper et reste prisonnière lors de son installation, d'où un gain de temps à l'installation. En outre, la rondelle d'appui est libre en rotation autour de son axe afin d'éviter la déformée du système de fixation lors de l'application d'un couple sur le boulon.

Avantageusement, la première branche est contre la première face d'appui de la rondelle d'appui et la deuxième branche est contre la deuxième face d'appui de la rondelle d'appui.

Avantageusement, chaque branche est réalisée par une plaque, la rondelle d'appui présente une couronne centrale et une couronne extérieure en sous-épaisseur par rapport à la couronne centrale, et chaque plaque comporte une empreinte circulaire dont le diamètre est compris entre le diamètre de la couronne centrale et le diamètre de la couronne extérieure.

Avantageusement, l'ensemble comporte pour chaque boulon, une plaque de blocage fixée de manière amovible au sabot, la tête présente une empreinte extérieure, et la plaque de blocage présente une contre-empreinte où l'empreinte extérieure et la contre-empreinte coopèrent pour bloquer la rotation de la plaque de blocage par rapport à la tête du boulon.

L'invention propose également un aéronef comportant au moins un ensemble selon l'une des variantes précédentes.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une vue de côté d'un aéronef présentant au moins un ensemble selon l'invention,
[Fig. 2] est une vue en perspective et en coupe par un plan vertical d'un ensemble selon l'invention.

### EXPOSE DETAILLE DE MODES DE REALISATION

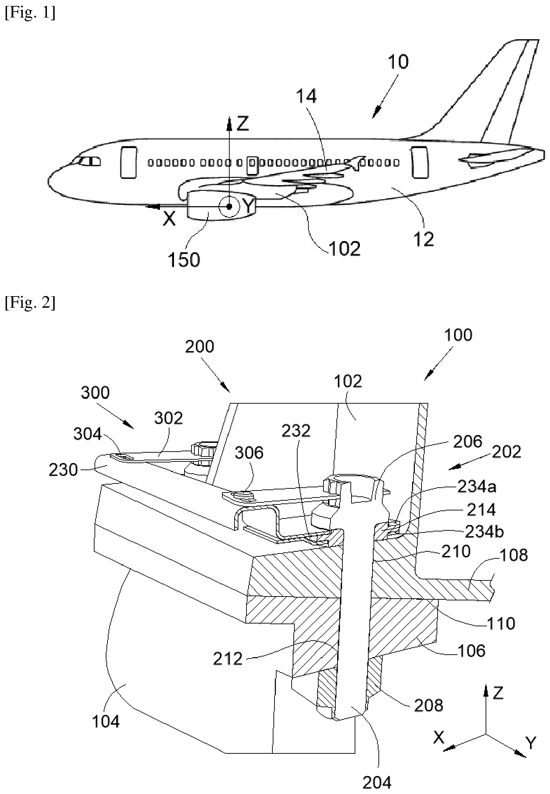

Dans la description qui suit, les termes relatifs à une position sont pris en référence à un aéronef en position d'avancement normal, c'est-à-dire comme il est représenté sur la Fig. 1.

La Fig. 1 montre un aéronef 10 qui comporte un fuselage 12 présentant une aile 14 de chaque côté et sous chaque aile 14 est fixé un mât 102.

Un moteur 150 est fixé au mât 102.

Dans toute la description qui va suivre, et par convention, la direction X correspond à la direction longitudinale du moteur 150, cette direction étant parallèle à l'axe longitudinal du moteur 150. D'autre part, la direction Y correspond à la direction orientée transversalement par rapport au moteur 150, et la direction Z correspond à la direction verticale ou hauteur, ces trois directions X, Y, Z étant orthogonales entre elles. La Fig. 2 montre un ensemble 100 selon l'invention qui est mis en place dans l'aéronef 10.

L'ensemble 100 comporte le mât 102 et une attache moteur 104 qui est ici une attache moteur avant. Pour des raisons de simplification, le moteur 150 n'est pas représenté sur la Fig. 2, mais il est fixé à l'attache moteur 104.

L'attache moteur 104 qui se fixe donc entre le mât 102 et le moteur 150 comporte ici une poutre 106 et le mât 102 présente ici une semelle 108 qui s'étend en partie inférieure du mât 102.

La semelle 108, et plus généralement le mât 102, présente une face d'appui et une face de contact orientée à l'opposé de la face d'appui et de la même manière, la poutre 106, et plus généralement l'attache moteur 104, présente une face d'appui et une face de contact orientée à l'opposé de la face d'appui.

L'attache moteur 104 est en appui contre la face de contact du mât 102, c'est-à-dire ici que la poutre 106 et la semelle 108 sont en appui l'une contre l'autre par leurs faces de contact qui sont dans un plan de contact 110 qui est ici globalement horizontal. Ici, la poutre 106 se plaque sous la semelle 108.

Dans le mode de réalisation de l'invention présenté ici, la face de contact de la semelle 108 correspond à une face inférieure de la semelle 108 et la face de contact de la poutre 106 correspond à une face supérieure de la poutre 106.

L'ensemble 100 comporte également un système de fixation 200 qui comporte au moins deux boulons 202 pour éviter la rotation de l'attache moteur 104 par rapport au mât 102, chacun comportant une tige filetée 204 avec une tête 206 et un écrou 208. Classiquement, il y a trois boulons 202 répartis transversalement.

Pour chaque tige filetée 204, le mât 102 comporte un premier alésage 210 et l'attache moteur 104 comporte un deuxième alésage 212 coaxial avec le premier alésage 210. Pour chaque tête 206, le système de fixation 200 comporte une rondelle d'appui 214 avec une première face d'appui et une deuxième face d'appui.

La deuxième face d'appui de la rondelle d'appui 214 est en appui contre la face d'appui du mât 102, et la tête 206 est en appui contre la première face d'appui de la rondelle d'appui 214, et la tige filetée 204 traverse successivement le premier alésage 210 et le deuxième alésage 212. L'écrou 208 se visse alors sur l'extrémité de la tige filetée 204 et vient en appui contre la face d'appui de l'attache moteur 104.

D'une manière générale, la semelle 108, et plus généralement le mât 102, et la poutre 106, et plus généralement l'attache moteur 104, sont pris en sandwich entre la tête 206 et l'écrou 208 et la rondelle d'appui 214 est disposée entre la tête 206 et le mât 102. Le système de fixation 200 comporte un sabot 230 et, pour chaque rondelle d'appui 214, une pince 232 solidaire du sabot 230.

Le sabot 230 s'étend le long des différents boulons 202 et il prend ici la forme d'un profilé.

Chaque pince 232 comporte une première branche 234a et une deuxième branche 234b entre lesquelles la rondelle d'appui 214 associée est pincée et ainsi, les rondelles d'appui 214 ne peuvent pas se perdre car elles restent entre les branches 234a-b. En outre, du fait de la présence du sabot 230 qui maintient toutes les rondelles d'appui 214, dès qu'une rondelle d'appui 214 est fixée, les autres sont maintenues en place. Chaque pince 232 est conformée pour maintenir naturellement une position serrée des branches 234a-b.

En outre, chaque rondelle d'appui 214 est libre de tourner autour de son axe entre les branches 234a-b lors du serrage ou du desserrage du boulon 202. Ainsi, il n'y a plus de risque de déformation du fait que la rondelle d'appui 214 est libre de tourner.

La première branche 234a est contre la première face d'appui de la rondelle d'appui 214 et la deuxième branche 234b est contre la deuxième face d'appui de la rondelle d'appui 214.

La première branche 234a est réalisée par une première plaque issue du sabot 230 et la deuxième branche 234b est réalisée par une deuxième plaque fixée à la première plaque. Dans le cas d'éléments métalliques, la fixation entre les plaques est réalisée par soudure par exemple.

Chaque plaque est parallèle au plan de contact 110, c'est-à-dire aux faces de contact. Dans le mode de réalisation de l'invention, la rondelle d'appui 214 présente une couronne centrale et une couronne extérieure en sous-épaisseur par rapport à la couronne centrale.

Chaque branche 234a-b, c'est-à-dire chaque plaque, comporte alors une empreinte circulaire dont le diamètre est compris entre le diamètre de la couronne centrale et le diamètre de la couronne extérieure. Ainsi, la couronne centrale se loge dans l'empreinte des deux branches 234a-b. La mise en place et le retrait de la rondelle d'appui 214 de la pince 232 s'effectuent en écartant les branches 234a-b.

L'ensemble 100 comporte également, pour chaque boulon 202, un système anti-rotation 300 qui empêche la rotation du boulon 202 après son serrage.

Le système anti-rotation 300 comporte une plaque de blocage 302 qui est fixée au sabot 230 de manière amovible. La fixation de la plaque de blocage 302 s'effectue ici par une vis 306 qui se visse dans le sabot 230.

La tête 206 du boulon 202 présente une empreinte extérieure qui permet la prise par un outil de serrage.

La plaque de blocage 302 présente une contre-empreinte où l'empreinte extérieure de la tête 206 et la contre-empreinte coopèrent pour bloquer la rotation de la plaque de blocage 302 par rapport à la tête 206 du boulon 202 autour de son axe.

Dans le mode de réalisation de l'invention présenté ici, l'empreinte extérieure est une empreinte mâle en étoile et la contre-empreinte est une empreinte femelle en étoile.

La plaque de blocage 302 présente une fenêtre de blocage 304, ici de forme oblongue qui permet le passage de la tige de la vis 306 tout en assurant une liberté de positionnement de la plaque de blocage 302. Ainsi, lorsque la vis 306 est en place, la plaque de blocage 302 est arrêtée en rotation et, par conséquent, le boulon 202 est également bloqué en rotation. C'est la vis 306 qui assure la fixation amovible de la plaque de blocage au sabot.

Dans le mode de réalisation de l'invention présenté à la Fig. 2, l'attache moteur est une attache moteur avant, mais elle s'applique de la même manière pour une attache moteur arrière.

De la même manière, l'axe de la tige filetée est orienté verticalement, mais il pourrait prendre une orientation différente.

De la même manière, le système de fixation prend en sandwich la semelle du mât, mais il est possible de prévoir que le système de fixation prend en sandwich une autre partie du mât.

## Revendications

1. Ensemble (100) pour un aéronef (10), ledit ensemble (100) comportant :
- un mât (102) présentant une face d'appui et une face de contact orientée à l'opposé de la face d'appui,
- une attache moteur (104) présentant une face d'appui et une face de contact orientée à l'opposé de la face d'appui, où la face de contact de l'attache moteur (104) est en appui contre la face de contact du mât (102),
- au moins deux boulons (202), chacun comportant une tige filetée (204) avec une tête (206) et un écrou (208) en appui contre la face d'appui de l'attache moteur (104),
- pour chaque tête (206), une rondelle d'appui (214) avec une première face d'appui et une deuxième face d'appui, où la deuxième face d'appui de la rondelle d'appui (214) est en appui contre la face d'appui du mât (102), et où la tête (206) est en appui contre la première face d'appui de la rondelle d'appui (214),
- un sabot (230), et
- pour chaque rondelle d'appui (214), une pince (232) solidaire du sabot (230) et comportant une première branche (234a) et une deuxième branche (234b) entre lesquelles la rondelle d'appui (214) est pincée et libre de tourner autour de son axe.

2. Ensemble (100) selon la revendication 1, **caractérisé en ce que** la première branche (234a) est contre la première face d'appui de la rondelle d'appui (214) et la deuxième branche (234b) est contre la deuxième face d'appui de la rondelle d'appui (214).

3. Ensemble (100) selon la revendication 2, **caractérisé en ce que** chaque branche (234a-b) est réalisée par une plaque, **en ce que** la rondelle d'appui (214) présente une couronne centrale et une couronne extérieure en sous-épaisseur par rapport à la couronne centrale, et **en ce que** chaque plaque comporte une empreinte circulaire dont le diamètre est compris entre le diamètre de la couronne centrale et le diamètre de la couronne extérieure.

4. Ensemble (100) selon l'une des revendications 1 à 3, **caractérisé en ce qu'**il comporte pour chaque boulon (202), une plaque de blocage (302) fixée de manière amovible au sabot (230), **en ce que** la tête (206) présente une empreinte extérieure, et **en ce que** la plaque de blocage (302) présente une contre-empreinte où l'empreinte extérieure et la contre-empreinte coopèrent pour bloquer la rotation de la plaque de blocage (302) par rapport à la tête (206) du boulon (202).

5. Aéronef (10) comportant au moins un ensemble selon l'une des revendications précédentes.

## Patentansprüche

1. Anordnung (100) für ein Luftfahrzeug (10), wobei die Anordnung (100) Folgendes aufweist:
- einen Mast (102), der eine Auflagefläche und eine der Auflagefläche entgegengerichtete Kontaktfläche aufweist,
- eine Motorhalterung (104), die eine Auflagefläche und eine der Auflagefläche entgegengerichtete Kontaktfläche aufweist, wobei die Kontaktfläche der Motorhalterung (104) an der Kontaktfläche des Mastes (102) anliegt,
- zumindest zwei Bolzen (202), die jeweils eine Gewindestange (204) mit einem Kopf (206) und eine an der Auflagefläche der Motorhalterung (104) anliegende Mutter (208) aufweisen,
- für jeden Kopf (206) eine Auflagescheibe (214) mit einer ersten Auflagefläche und einer zweiten Auflagefläche, wobei die zweite Auflagefläche der Auflagescheibe (214) an der Auflagefläche des Mastes (102) anliegt und wobei der Kopf (206) an der ersten Auflagefläche der Auflagescheibe (214) anliegt,
- einen Schuh (230) und
- für jede Auflagescheibe (214) eine Klemme (232), die mit dem Schuh (230) fest verbunden ist und einen ersten Schenkel (234a) und einen zweiten Schenkel (234b) aufweist, zwischen denen die Auflagescheibe (214) eingeklemmt ist und sich frei um ihre Achse drehen kann.

2. Anordnung (100) nach Anspruch 1, **dadurch gekennzeichnet, dass** der erste Schenkel (234a) an der ersten Auflagefläche der Auflagescheibe (214) anliegt und der zweite Schenkel (234b) an der zweiten Auflagefläche der Auflagescheibe (214) anliegt.

3. Anordnung (100) nach Anspruch 2, **dadurch gekennzeichnet, dass** jeder Schenkel (234a - b) durch eine Platte ausgeführt ist, dass die Auflagescheibe (214) einen mittleren Kranz und einen äußeren Kranz von geringerer Dicke als der mittlere Kranz aufweist und dass jede Platte eine kreisförmige Prägung aufweist, deren Durchmesser zwischen dem Durchmesser des mittleren Kranzes und dem Durchmesser des äußeren Kranzes liegt.

4. Anordnung (100) nach einem der Ansprüche 1 bis 3, **dadurch gekennzeichnet, dass** sie für jeden Bolzen (202) eine Blockierplatte (302) aufweist, die abnehmbar am Schuh (230) befestigt ist, dass der Kopf (206) eine äußere Prägung aufweist und dass die Blockierplatte (302) eine Gegenprägung aufweist, wobei die äußere Prägung und die Gegenprägung zusammenwirken, um die Drehung der Blockierplatte (302) relativ zum Kopf (206) des Bolzens (202) zu blockieren.

5. Luftfahrzeug (10), umfassend zumindest eine Anordnung nach einem der vorangehenden Ansprüche.

## Claims

1. Assembly (100) for an aircraft (10), said assembly (100) comprising:
- a pylon (102) having a bearing face and a contact face oriented away from the bearing face,
- an engine mount (104) having a bearing face and a contact face oriented away from the bearing face, where the contact face of the engine mount (104) bears against the contact face of the pylon (102),
- at least two bolts (202), each one comprising a threaded stem (204) with a head (206) and a nut (208) bearing against the bearing face of the engine mount (104),
- for each head (206), a bearing washer (214) with a first bearing face and a second bearing face, where the second bearing face of the bearing washer (214) bears against the bearing face of the pylon (102), and where the head (206) bears against the first bearing face of the bearing washer (214),
- a shoe (230), and
- for each bearing washer (214), a clamp (232) that is secured to the shoe (230) and comprises a first branch (234a) and a second branch (234b) between which the bearing washer (214) is clamped and is free to rotate about its axis.

2. Assembly (100) according to Claim 1, **characterized in that** the first branch (234a) is against the first bearing face of the bearing washer (214) and the second branch (234b) is against the second bearing face of the bearing washer (214).

3. Assembly (100) according to Claim 2, **characterized in that** each branch (234a-b) is realized by a plate, **in that** the bearing washer (214) has a central crown and an outer crown that is thinner than the central crown, and **in that** each plate comprises a circular imprint, the diameter of which is between the diameter of the central crown and the diameter of the outer crown.

4. Assembly (100) according to one of Claims 1 to 3, **characterized in that** it comprises, for each bolt (202), an immobilizing plate (302) removably attached to the shoe (230), **in that** the head (206) has an external imprint, and **in that** the immobilizing plate (302) has a counter-imprint, where the external imprint and the counter-imprint cooperate in order to prevent the immobilizing plate (302) from rotating relative to the head (206) of the bolt (202).

5. Aircraft (10) comprising at least one assembly according to one of the preceding claims.
